# EUROPÄISCHE PATENTSCHRIFT

(11) **EP 2 336 538 B1**
(45) Veröffentlichungstag und Bekanntmachung des Hinweises auf die Patenterteilung: **14.11.2018**
(21) Anmeldenummer: 10014862.6
(22) Anmeldetag: 23.11.2010
(51) Int. Cl.: F01N 5/02, F02M 26/06, F02M 26/15, F02M 26/28, F02M 26/44

(54) **Einrichtung zur Abgasrückführung sowie Verfahren zur Erwärmung eines Kühlmediums einer Brennkraftmaschine und Verwendung der Einrichtung zur Abgasrückführung**
Device for recirculation of exhaust gas and method for heating a coolant of a combustion engine and use of the exhaust gas recirculation device
Dispositif pour la récirculation de gaz d'échappement ainsi que procédé de chauffage d'un support de refroidissement d'un moteur à combustion interne et utilisation du dispositif pour la récirculation de gaz d'échappement

(30) Priorität: 17.12.2009 DE 102009058609
(43) Veröffentlichungstag der Anmeldung: 22.06.2011
(73) Patentinhaber: Volkswagen Aktiengesellschaft, 38440 Wolfsburg (DE)
(72) Erfinder: Biener, Martin, 38173 Veltheim (DE); Sprute, Jörg, 29399 Wahrenholz (DE); Riekhof, Peter, 38304 Wolfenbüttel (DE); Kost, Roland, 38448 Wolfsburg (DE)

(56) Entgegenhaltungen:
- FR-A1- 2 885 178
- FR-A1- 2 920 834
- FR-A1- 2 923 535
- FR-A1- 2 930 296
- JP-A- 10 196 464
- JP-A- 10 266 902
- JP-A- 2000 146 465
- US-A- 5 205 265
- US-A- 6 155 042
- US-A1- 2010 050 631

## Beschreibung

Die vorliegende Erfindung betrifft eine Einrichtung zur Abgasrückführung zur zumindest teilweisen Rückführung von Abgasen einer Verbrennungseinrichtung in den der Verbrennungseinrichtung zuzuführenden Gasstrom, die im Strömungskanal für das rückzuführende Abgas zur Abkühlung des Abgases und zur Ableitung von Abgaswärme einen Abgasrückführungskühler aufweist.

Außerdem betrifft die vorliegende Erfindung eine Brennkraftmaschine, die eine erfindungsgemäße Einrichtung zur Abgasrückführung umfasst, sowie ein Kraftfahrzeug, welches wiederum die Brennkraftmaschine umfasst.

Außerdem betrifft die vorliegende Erfindung die Verwendung der erfindungsgemäßen Einrichtung.

Zur Verringerung von Stickoxid- und Rußemissionen von Verbrennungsmotoren mit Abgas-turbo-Aufladung wird das entstandene Abgas stromabwärts der Turbine des Abgasturboladers beziehungsweise stromabwärts eines gegebenenfalls angeordneten Dieselpartikelfilters entnommen und stromaufwärts des Verdichters des Abgasturboladers der Ansaugluft zugeführt. Der Volumenstrom der Abgasrückführmenge wird üblicherweise mittels eines Abgasrückführungs-Ventils geregelt, das in der Abgasrückführungsstrecke angeordnet ist. Um den Verdichter vor zu hohen Abgastemperaturen zu schützen, ist üblicherweise in der Abgasrückführungsstrecke zusätzlich ein Abgasrückführungskühler angeordnet, der unter Abführung von Abgaswärme das dem Verdichter zugeführte Abgas abkühlt. Diese Abgaskühlung hat den zusätzlichen Effekt der weiteren Reduktion von Stickoxiden im Abgas.

Der Zweck der Abgasrückführung besteht in der Herstellung eines Gemisches aus Frischluft und Abgas, welches dem Verbrennungsprozess zugeführt wird und einen niedrigeren Sauerstoffgehalt aufweist als reine Frischluft, wodurch die Temperatur im Brennraum einer Verbrennungseinrichtung oder Brennkraftmaschine nicht mehr ein Niveau ausreicht, bei dem Stickstoffoxid in der Menge gebildet wird, wie es bei reiner Frischluftzufuhr der Fall wäre.

Einige der verwendeten Abgasrückführungskühler werden dafür eingesetzt, die bei der Abkühlung gewonnene Wärme des Abgases weiterer Nutzung, wie zum Beispiel zur Erwärmung der Brennkraftmaschine oder auch eines Fahrgastraumes eines mit der Brennkraftmaschine ausgestatteten Kraftfahrzeuges oder weiterer Gegenstände, zuzuführen.

Die EP 1 455 078 A1 offenbart eine Brennkraftmaschine mit einem Abgasturbolader und einem Abgasrückführungssystem, welches kostengünstig ausgestaltet ist und einen optimierten Motorbetrieb ermöglicht. Zu diesem Zweck ist neben einem Niederdruck-Rückführungspfad ein zusätzlicher Hochdruck-Rückführungspfad zur Ableitung des Abgases vorgesehen.

Die DE 10 2004 061 809 A1 offenbart ein Heiz- und/oder Kühlsystem für ein Kraftfahrzeug, welches zwar keine Abgasrückführung aufweist, jedoch zur Erwärmung des Motors und/oder zur Beheizung des Kraftfahrzeuges einen extra Brenner einsetzt zur zusätzlichen Erwärmung des Abgases und Ableitung beziehungsweise Abnahme der Wärme des Abgases in einem Wärmetauscher. Durch den Einsatz des zusätzlichen Brenners wird jedoch das Gesamtgewicht der Brennkraftmaschine erhöht. Beim Betrieb des Brenners wird zusätzlicher Brennstoff verbraucht.

In der DE 10 2006 054 043 A1 ist eine Brennkraftmaschine mit Abgasrückführung dargestellt, die einen Hochdruck- und einen Niederdruck-Rückführungspfad aufweist, wobei im Niederdruck-Rückführungspfad ein Abgasrückführungskühler angeordnet ist. Dieses Abgasrückführungssystem umfasst somit neben dem Abgasrückführungskühler eine erste Abgasableitung zur Ableitung von nicht rückgeführtem Abgas, die an einer ersten Abzweigung stromaufwärts des Abgasrückführungskühlers angeordnet ist.

Aus der DE 10 2005 052 496 A1 ist eine Brennkraftmaschine mit einem Abgasturbolader bekannt, die im Abgasrückführungspfad einen Abgaskühler aufweist. Dabei sind die Abgas-Volumenströme in ihrer Größe und Richtung durch den Abgasrückführungspfad unvariierbar vorgegeben.

Die FR 2920834 A1 beschreibt eine Einrichtung zur Rückführung von Abgas in einen Verbrennungsprozess zur Verringerung von Schadstoff-Emissionen. Im Strömungskanal für das rückzuführende Abgas ist ein Abgasrückführungskühler und stromabwärts des Abgasrückführungskühlers ist eine Abzweigung, an der eine Abgasableitung zur Ableitung von nicht rückzuführendem Abgas angeschlossen ist, vorgesehen.

Der US 6155042 sowie der FR 2885178 A1 sind eine Einrichtung zur Rückführung von Abgasen entnehmbar, bei der ebenfalls das Abgas einen Abgasrückführungskühler durchströmt, wobei dieser Volumenstrom durch ein Ventil regelbar ist.

Aus der FR 2930296 A1 ist ein kombiniertes Modul bekannt geworden, das die Funktionsbauteile Katalysator, Partikelfilter, Abzweig zur Abgasrückführleitung, Abgasrückführkühler sowie eine zusätzliche Leitung kompakt aneinandergereiht anordnet. Über die zusätzliche Leitung kann Abgas, das durch den Abgasrückführkühler geströmt ist, von einer stromab des Abgasrückführkühlers angeordneten Abzweigung in die Hauptabgasleitung zurückgeleitet werden und so ohne Rückführung zum Ansaugsystem an die Umgebung abgeführt werden.

Es besteht bei vielen in Kraftfahrzeugen eingesetzten Brennkraftmaschinen, insbesondere bei Dieselmotoren, das Problem der geringen Wärmeentwicklung beim Betrieb aufgrund des geringen Kraftstoffverbrauchs der Motoren. Gleichzeitig steigen aber üblicherweise die Komfortansprüche an die Temperierung im Innenraum des mit der Brennkraftmaschine ausgestatteten Kraftfahrzeuges. Aufgrund des geringen Kraftstoffverbrauchs wird relativ wenig chemische Energie in Wärmeenergie umgewandelt, so dass dementsprechend wenig Wärmeenergie zur Aufheizung des Motors und/oder des Fahrgastraumes zur Verfügung steht. Dies bedingt zumindest bis zum Erreichen des Betriebswärmezustandes üblicherweise einen erhöhten Kraftstoffbedarf bei gleichbleibender Motorenleistung und/oder Einbußen bei der Erwärmung des Fahrgastraumes. Zur Lösung dieses Problems werden bereits zusätzliche Verbrennungseinrichtungen, wie der oben genannte zusätzliche Brenner, eingesetzt, die jedoch neben einer Gewichtserhöhung des Kraftfahrzeuges außerdem im Betrieb einen erhöhten Kraftstoffbedarf bewirken.

Der vorliegenden Erfindung liegt somit die Aufgabe zugrunde, eine Einrichtung und deren Verwendung zur Verfügung zu stellen, mittels derer in kostengünstiger, bauraum- und gewichtssparender Weise ein kraftstoffminimierter Betrieb einer Verbrennungseinrichtung unter größtmöglicher wärmetechnischer Ausnutzung der chemischen Energie des eingesetzten Kraftstoffes realisierbar ist.

Diese Aufgabe wird durch die erfindungsgemäße Abgasrückführungseinrichtung nach Anspruch 1 sowie durch die erfindungsgemäße Verwendung der erfindungsgemäßen Einrichtung zur Erwärmung eines Kühlmediums einer Brennkraftmaschine nach Anspruch 11 gelöst. Vorteilhafte Ausgestaltungen der erfindungsgemäßen Einrichtung zur Abgasrückführung sind in den Unteransprüchen 2 bis 8 angegeben. Vorteilhafte Ausgestaltung der erfindungsgemäßen Verwendung zur Erwärmung eines Kühlmediums sind in den Unteransprüchen 12 bis 14 angegeben. Die Erfindung ergänzend wird außerdem eine Brennkraftmaschine nach Anspruch 9 sowie ein Kraftfahrzeug nach Anspruch 10 zur Verfügung gestellt.

Es wird erfindungsgemäß eine Abgasrückführungseinrichtung zur zumindest teilweisen Rückführung von Abgasen einer Verbrennungseinrichtung in den der Verbrennungseinrichtung zuzuführenden Gasstrom zur Verfügung gestellt, wobei die Einrichtung im Strömungskanal für das rückzuführende Abgas umfasst; eine Turbine eines Abgas-Turboladers, einen Katalysator, einen Partikelfilter und einen Abgasrückführungskühler zur Abkühlung des Abgases und zur Ableitung von Abgaswärme aufweist, die nacheinander in dem Strömungskanal angeordnet sind. Die Einrichtung umfasst ferner eine stromabwärts des Abgasrückführungskühlers erste angeordnete Abzweigung, an der eine erste Abgasableitung zur Ableitung von nichtrückzuführendem Abgas in die Umgebung angeschlossen ist. Die Einrichtung umfasst ferner eine stromaufwärts des Abgasrückführungskühlers und stromabwärts des Partikelfilters angeordnete zweite Abzweigung, an der eine zweite Abgasableitung zur Ableitung von nicht rückzuführendem Abgas in die Umgebung angeordnet ist. Die erfindungsgemäße Einrichtung zur Abgasrückführung weist ferner ein kompaktes Gehäuse auf, in welchem der Abgasrückführungskühler, der Partikelfilter, die erste Abzweigung und die zweite Abzweigung angeordnet sind.

Der Abgasrückführungskühler und die erste Abzweigung sind somit seriell angeordnet und stehen miteinander in strömungstechnischer Verbindung. Die erste Abzweigung dient zur Aufspaltung des Volumenstromes des Abgases in ein rückzuführendes Gas und ein nichtzurückzuführendes Gas. Die Verbrennungsmaschine ist dabei insbesondere eine Brennkraftmaschine, bei der abgeführte Wärme zur Aufheizung des Motors eines Kraftfahrzeuges und/oder eines Fahrgastraumes dient. Dabei ist die Anwendung der Erfindung nicht auf eine Brennkraftmaschine eines Kraftfahrzeuges eingeschränkt, sondern sie kann auch an Heizanlagen wie zum Beispiel an Heizkesseln eingesetzt werden, bei denen ebenfalls eine Abgasrückführung und -abkühlung des Abgases zwecks Schadstoffausstoßverringerung durchgeführt wird. Die Erfindung ist im Folgenden allerdings anhand einer Brennkraftmaschine erläutert.

Durch die Anordnung der Zuleitung zur Zuführung von Abgas zur zweiten Abzweigung und zum Abgasrückführungskühler stromaufwärts der zweiten Abzweigung und dadurch, dass die Zuleitung ein Bestandteil eines Partikelfilters ist, leitet der Partikelfilter direkt das Abgas zur zweiten Abzweigung und zum Abgasrückführungskühler.

Dabei können der Abgasrückführungskühler und der Partikelfilter in einem Gehäuse angeordnet sein. Der Partikelfilter dient insbesondere bei Anordnung an Dieselmaschinen zur Säuberung des rückzuführenden Gases, so dass sauberes Abgas dem Motor zugeführt wird.

Der Abgasrückführungskühler der erfindungsgemäßen Einrichtung bewirkt eine Wärmeübertragung vom Abgas in ein Kühlmedium, welches vorzugsweise im Gegenstromprinzip an einer durch den Abgasrückführungskühler verlaufenden Abgasleitung entlang geführt wird. Das erwärmte Kühlmedium dient aufgrund seiner Verteilung am oder im Motorengehäuse zur Erwärmung des Motors, der im erwärmten Zustand mit einem besseren Wirkungsgrad betreibbar ist. Außerdem lässt sich die im Abgasrückführungskühler abgeleitete Wärme zur Beheizung eines Fahrgastraumes oder auch von Fenstern oder Außenspiegeln eines Kraftfahrzeuges nutzten. Neben der Wärmeübertragung dient der Abgasrückführungskühler außerdem zur Abkühlung des Abgases zum Schutz des Verdichters der Brennkraftmaschine vor zu hohen Temperaturen sowie dazu, um das abgekühlte Abgas mit einem entsprechend geringen Volumen der Frischluft zuführen zu können und somit ein ausreichendes Verdichtungsverhältnis einfach realisieren zu können.

Mit der erfindungsgemäßen Einrichtung lässt sich die Wärmeenergie des gesamten Abgasvolumenstromes nutzen. Dadurch, dass das Abgas, welches nicht dem Verdichter zuzuführen ist, nach dem Abgasrückführungskühler in die Umgebung abgeführt wird, lässt sich das gesamte Abgas dem Abgasrückführungskühler zuführen und erst nach dessen Durchströmung regeln, wieviel Abgas tatsächlich dem Verdichter zuzuführen ist. Der Abgasrückführungskühler in der erfindungsgemäßen Einrichtung ist somit ein vollwertiger Wärmetauscher zur Ausnutzung der Wärme des gesamten Abgases und dient wesentlich der Erhöhung des Wirkungsgrades der Brennkraftmaschine. Die chemische Energie des gesamten Brennstoffes zum Betrieb der Brennkraftmaschine wird effizienter genutzt, da ein größerer Beitrag der aus der chemischen Energie gewonnen Wärmeenergie zur Erwärmung zur Verfügung gestellt. Außerdem lässt sich mittels der erfindungsgemäßen Einrichtung eine schnellere Erwärmung des Motors realisieren, was sich zusätzlich brennstoffsparend auswirkt. Es muss somit nicht mehr Brennstoff eingesetzt werden als zum eigentlichen Betrieb der Brennkraftmaschine zwecks Fortbewegung des Kraftfahrzeuges notwendig ist, da auch eine Beheizung des Fahrgastraumes verbessert werden kann.

Bis auf die Abzweigung stromabwärts des Abgasrückführungskühlers sind dieser sowie der gesamte Abgasrückführungspfad dabei gegebenenfalls bereits in einer bestehenden Brennkraftmaschine beziehungsweise Abgasanlage oder in einem Fahrzeug angeordnet. Die erfindungsgemäße erste Abzweigung stromabwärts des Abgasrückführungskühlers ist in einfacher und kostensparender Weise in eine solche Anlage einbringbar, so dass sich sowieso vorhandene Bauteile im Abgasrückführungspfad weiterhin nutzen lassen. Das heißt, dass die erfindungsgemäße Einrichtung auch durch einfache Nachrüstung bestehender Abgasrückführungspfade realisiert werden kann.

In vorteilhafter Ausgestaltung ist vorgesehen, dass in der zweiten Abgasableitung ein erstes Ventil zur Einstellung des Volumenstromes des Abgases in der ersten Abgasableitung und damit auch des verbleibenden Volumenstromes durch den Abgasrückführungskühler angeordnet ist. In Richtung des Volumenstromes des Abgases ist somit die zweite Abzweigung vor der ersten Abzweigung angeordnet. Das erste Ventil kann als Sperrventil ausgestaltet sein, welches den Strömungsquerschnitt im Wesentlichen vollständig freigibt oder schließt. Alternativ kann das erste Ventil auch als Drosselventil ausgestaltet sein, mit welchem der Volumenstrom in seiner Größe einstellbar ist, insbesondere derart, dass die Drosselung des Volumenstromes vollständig sein kann. Das Ventil kann dabei in einfacher Ausgestaltung mit einer schwenkbaren Klappe ausgestattet sein, welches den Strömungsquerschnitt entweder vollständig schließt oder vollständig freigibt und somit als Stellglied zur Einstellung des Volumenstromes dient. Die fluidtechnische Verbindung zwischen der zweiten Abzweigung und dem Abgasrückführungskühler ist durch ein kompaktes Gehäuse realisiert, in welchem ein Partikelfilter angeordnet ist und gegebenenfalls zusätzlich noch ein Katalysator angeordnet ist.

Zwecks Rückführung des Abgases zur Verbrennungseinrichtung ist an der ersten Abzweigung eine Rückführungsleitung angeordnet, die an einem Verdichter eines Abgas-Turboladers angeschlossen ist oder anschließbar ist. Gegebenenfalls sind in der Rückführungsleitung weitere Abgaskomponenten und/oder Messeinrichtungen und/oder Ventile integriert.

Zur Reduzierung von Material, Bauraum, Gewicht und Kosten ist die erste Abgasableitung mit der zweiten Abgasableitung in einer Einmündung verbunden. Das heißt, dass nicht die Enden von beiden Abgasableitungen bis an die Umgebung geführt sein müssen, sondern dass beide Abgasableitungen in einer Sammelleitung vereinigt werden, die die Abgase zur Umgebung abführt.

Um ein in sich geschlossenes Rückführungssystem bereitzustellen, umfasst die Einrichtung zur Abgasrückführung stromaufwärts der zweiten Abzweigung einen Katalysator sowie eine Turbine des Abgas-Turboladers und stromabwärts der Rückführungsleitung den Verdichter. Das in sich geschlossene Rückführungssystem umfasst somit einen kompletten Abgas-Turbolader, so dass es als Baueinheit komplett in den Abgaspfad einer Brennkraftmaschine integrierbar ist.

In vorteilhafter Weise umfasst die erfindungsgemäße Einrichtung zur Abgasrückführung in der Rückführungsleitung ein zweites Ventil zur Einstellung des Volumenstromes des Abgases vom Abgasrückführungskühler zum Verdichter des Abgas-Turboladers. Das zweite Ventil ist damit im Abgasrückführungsstrang angeordnet. Es kann ebenfalls als Drossel- oder Sperrventil ausgestaltet sein. Als Regelventil ist mit ihm die Größe des Volumenstromes des vom Abgasrückführungskühler abgekühlten Abgases in Richtung des Abgas-Turboladers beeinflussbar. Durch dieses Ventil ist demzufolge auch einstellbar, wieviel des durch den Abgasrückführungskühler geströmten Abgases zum Abgas-Turbolader zurückströmt und welcher Anteil des Abgases durch die erste Abgasableitung in die Umgebung abgeleitet wird.

Die Erfindung ist auch dann vorteilhaft ausgestaltet, wenn in der ersten Abgasableitung ein drittes Ventil angeordnet ist, mit welchem die Größe des Volumenstromes des Abgases in der ersten Abgasableitung einstellbar ist. Vorzugsweise ist auch dieses in der ersten Abgasableitung angeordnete dritte Ventil ein Regelventil, mit welchem bei geschlossenem ersten Ventil der Gegendruck und damit auch die Abgasrückführungsrate erhöht werden kann.

Der Einsatz eines gesonderten dritten Ventils erübrigt sich dann, wenn das erste Ventil derart ausgebildet ist, dass es bei Schließung einer der beiden Abgasableitungen gleichzeitig die andere Abgasableitung öffnet. Dies lässt sich insbesondere durch eine zwischen den Durchlässen der Abgasableitungen schwenkbare Klappe realisieren.

Die genannten Ventile können jeweils als Schwenkklappe ausgebildet sein, die in geschlossener Stellung einen Leckage-Volumenstrom des Abgases von maximal 10 % eines durch einen vollständig geöffneten Durchlass des jeweiligen Ventils leitbaren Volumenstromes zulässt. Das heißt, dass das erste und/oder das zweite und/oder das dritte Ventil als eine Schwenkklappe ausgebildet ist, die wie eine herkömmliche Abgasklappe oder Stauklappe ausgebildet sein kann, da an das jeweilige Ventil relativ geringe Dichtigkeitsanforderungen bestehen und somit einfache und kostengünstige Bauweisen der Ventile realisiert werden können. Es ist dabei insbesondere vorgesehen, dass die jeweilige Schwenkklappe mit einer geeigneten Aktorik (elektrisch oder pneumatisch) betätigbar ist.

In weiterer bevorzugter Ausführungsform ist vorgesehen, dass der Abgasrückführungskühler ein mit dem Abgas in Kontakt bringbares Katalysemittel aufweist. Dieses Katalysemittel kann in Form einer Beschichtung im Abgasrückführungskühler auf dessen Abgasseite angeordnet sein. Bei einer derartigen Ausgestaltung sollte stromaufwärts des Abgasrückführungskühlers ein Dosierventil zur Zuführung von Reduktionsmittel angeordnet sein. Der Abgasrückführungskühler lässt sich somit als Katalysator nutzen. Dementsprechend kann gegebenenfalls auf den Einsatz eines extra Katalysators verzichtet werden.

Da die Einrichtung zur Abgasrückführung im Wesentlichen alle wichtigen Komponenten der Abgasanlage und/oder der Abgasrückführung umfasst, ist die Erfindung ebenfalls auf eine komplette Abgasanlage bezogen, welche die erfindungsgemäße Einrichtung zur Abgasrückführung aufweist.

Erfindungsgemäß wird zudem eine Brennkraftmaschine zur Verfügung gestellt, welche die erfindungsgemäße Einrichtung zur Abgasrückführung umfasst, wobei diese in einem Abgasrückführungspfad angeordnet ist und die erste Abgasableitung derart eingerichtet ist, dass sie das nicht-rückzuführende Abgas in die Umgebung entlässt. Dabei können gegebenenfalls noch weitere Komponenten in der ersten Abgasableitung angeordnet sein, wobei ein wesentliches Kennzeichnen der Erfindung darin besteht, dass keine Rückführung des Gases in der ersten Abgasableitung in den Verbrennungsprozess erfolgt. Bei Anordnung der zweiten Abgasableitung mündet diese ebenfalls an der Umgebung. Vorzugsweise ist die Einrichtung zur Abgasrückführung dabei eine Niederdruck-Abgasrückführung, das heißt, dass die einzelnen Komponenten der erfindungsgemäßen Einrichtung zur Abgasrückführung dafür ausgelegt sind, im Niederdruckbereich zu funktionieren.

Erfindungsgemäß wird zudem ein Kraftfahrzeug zur Verfügung gestellt, welches die erfindungsgemäße Brennkraftmaschine umfasst.

Zur Lösung des genannten Problems wird außerdem erfindungsgemäß eine Verwendung der erfindungsgemäßen Einrichtung zur Erwärmung eines Kühlmediums in der Brennkraftmaschine mittels einer erfindungsgemäßen Einrichtung zur Abgasrückführung zwecks Erwärmung der Brennkraftmaschine und/oder eines Raumes oder eines Gegenstandes zur Verfügung gestellt, bei der Abgas in einem Abgasrückführungssystem durch einem Abgasrückführungskühler einen der Brennkraftmaschine zuzuführenden Gasstrom zugeleitet wird und der Abgasrückführungskühler als Wärmetauscher Wärme vom Abgas in das Kühlmedium überträgt, so dass das Kühlmedium erwärmt wird. Erfindungsgemäß wird der Abgasvolumenstrom stromabwärts des Abgasrückführungskühlers einer ersten Abzweigung zugeführt, in der ein Teil dieses Abgasvolumenstromes mittels einer ersten Abgasableitung in die Umgebung abgeleitet wird und der verbleibende Teil des Abgasvolumenstroms zur Brennkraftmaschine zurückgeleitet wird. Wie bereits zur erfindungsgemäßen Einrichtung erläutert, wird somit das gesamte Abgas durch den Abgasrückführungskühler geleitet, wobei jedoch nach dem Abgasrückführungskühler nicht das gesamte Abgas dem Verdichteter des Abgas-Turboladers zugeführt werden muss, sondern nur ein Teil davon, und das restliche Abgas an die Umgebung abgeleitet wird. Das erwärmte Kühlmedium kann zur Aufheizung der Brennkraftmaschine dienen und somit zur Kraftstoffeinsparung genutzt werden. Alternativ lässt sich die Abgabe des Abgases auch zur Beheizung eines Fahrgastraumes oder auch eines Gegenstandes wie zum Beispiel eines Fensters oder Außenspiegels eines mit der Brennkraftmaschine angetriebenen Fahrzeuges nutzen.

Dabei lässt sich mittels eines ersten Ventils in einer ersten Abgasableitung, die an einer stromaufwärts des Abgasrückführungskühlers angeordneten zweiten Abzweigung angeschlossen ist, der Volumenstrom des Abgases durch die zweite Abgasableitung und somit auch der verbleibende Volumenstrom von Abgas durch den Abgasrückführungskühler einstellen. Dadurch, dass der Volumenstrom des Abgases durch die erste Abgasableitung und somit auch der verbleibende Volumenstrom von Abgas durch den Abgasführungskühler eingestellt wird, wird Einfluss genommen auf die vom Abgasrückführungskühler auf das Kühlmedium übertragende Wärmemenge.

Es ist möglich, die erfindungsgemäße Einrichtung zur Abgasrückführung zur Ausnutzung des gesamten Abgasstromes zwecks Erwärmung der Brennkraftmaschine und/oder eines Raumes, insbesondere eines Fahrgastraumes, eines von der Brennkraftmaschine angetriebenen Fahrzeuges zu verwenden. Insbesondere kommt es hierbei darauf an, dass die Wärme des gesamten Abgasstromes vom Abgasrückführungskühler verwertet werden kann.

Eine weitere erfindungsgemäße Verwendung der erfindungsgemäßen Einrichtung zur Abgasrückführung dient zur Steuerung und/oder der Regelung des Abgasdruckes im Abgassystem zwecks Beeinflussung der Abgasrückführungsrate. Das heißt, dass sich durch Betätigung der einzelnen Ventile die jeweiligen Querschnitte der Abgasleitungen verändern lassen, womit Einfluss genommen wird auf die je Zeiteinheit ausströmende Abgasmenge, so dass der Staudruck in der gesamten Abgasanlage variierbar ist. Je höher dabei der Druck des Abgases am Anfang der Abgasstrecke ist, umso größer ist das Druckgefälle zum Transport des Abgases durch den Rückführungsstrang und umso mehr Abgas lässt sich zurückführen.

Die Erfindung wird im Folgenden anhand der beiliegenden Zeichnungen erläutert. Es zeigt dabei:
- Figur 1: die erfindungsgemäße Einrichtung zur Abgasrückführung in schematischer Darstellung und
- Figur 2: ein in der erfindungsgemäßen Einrichtung zur Abgasrückführung einsetzbares Ventil in einem Teilschnitt.

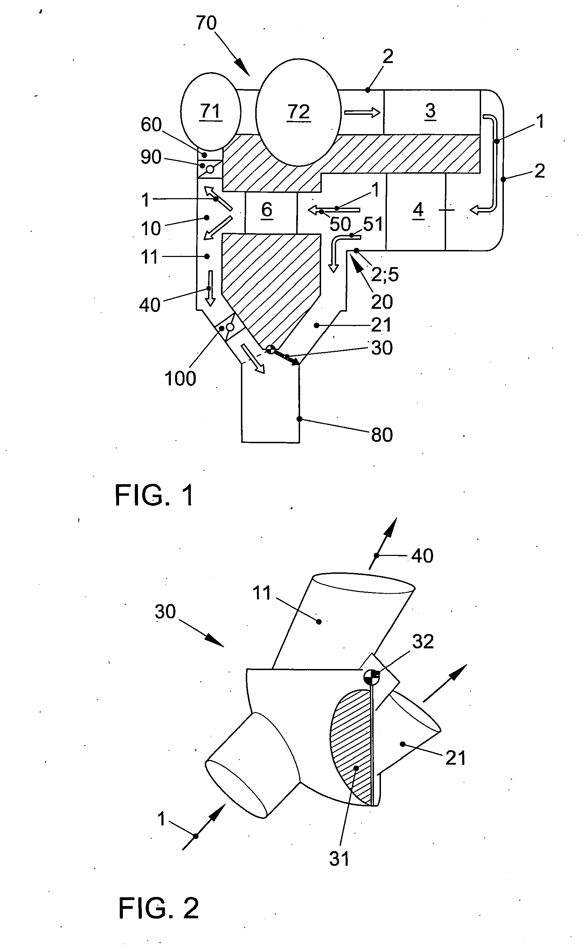

Zunächst wird der Aufbau der erfindungsgemäßen Einrichtung zur Abgasrückführung anhand von Figur 1 beschrieben. Wesentliche Elemente des Abgasrückführungssystems sind der Abgasrückführungskühler 6 sowie die stromabwärts des Abgasrückführungskühlers 6 angeordnete erste Abzweigung 10. An die erste Abzweigung 10 schließt sich eine erste Abgasableitung 11 zur Ableitung von Abgas an die Umgebung an sowie eine Rückführungsleitung 60 zur Leitung von Abgas in Richtung des Abgas-Turboladers 70. Somit lässt sich das gesamte Abgas durch den Abgasrückführungskühler 6 leiten und erst nach diesem in einzelne Volumenströme zwecks Ableitung an die Umgebung und Zuleitung zum Abgas-Turbolader aufteilen.

Vorteilhafterweise ist die erfindungsgemäße Einrichtung zur Abgasrückführung mit den weiteren in Figur 1 dargestellten Komponenten ausgestaltet. Das heißt, dass sie den Abgas-Turbolader 70 umfassen kann, aus dessen Turbine 72 Abgas in Richtung der Strömung 1 austritt und einem Katalysator 3 und stromabwärts des Katalysators einem Partikelfilter 4 zugeführt wird. Dabei ist die Erfindung nicht auf die Anordnung eines Katalysators und eines Partikelfilters eingeschränkt. Eine Frischluftanlage zur Zuführung von Frischluft- und Abgasgemisch in den Motor ist dabei in der Figur 1 nicht dargestellt.

Die Zuleitung des Abgases zu den einzelnen dargestellten Komponenten erfolgt mittels strömungstechnischer Verbindungen 2, wie zum Beispiel Leitungen, und/oder durch integrale Anordnung verschiedener Komponenten in einem Gehäuse.

Stromabwärts des Partikelfilters 4 ist eine zweite Abzweigung 20 vorgesehen, in der der Volumenstrom aufgeteilt wird in den Volumenstrom durch den Abgasrückführungskühler 50 sowie in den abzuleitenden Volumenstrom 51. Der Volumenstrom durch den Abgasrückführungskühler 50 wird, wie bereits beschrieben, stromabwärts des Abgasrückführungskühlers 6 in den Volumenstrom des Abgases in der ersten Abgasleitung 40 sowie in den zum Abgasturbolader 70 zurückzuführenden Gasstrom durch die Rückführungsleitung 60 aufgeteilt. Diese Rückführungsleitung 60 schließt an den Verdichter 71 des Abgas-Turboladers 70 an und führt somit das Abgas dem Verdichter zu, so dass dieser das zurückgeführte Abgas verdichtet und gegebenenfalls gleich mit Frischluft vermischt und der Brennkraftmaschine zuführt.

Die zweite Abgasableitung 21 zweigt somit von der zweiten Abzweigung 20 von der Zuleitung 5 ab, die das gesamte Abgas transportiert. Die an der ersten Abzweigung 10 abgehende erste Abgasableitung 11 ist zwecks Gewichts- und Bauraumeinsparung mit der zweiten Abgasableitung 21 in der Einmündung 80 verbunden. Zur Regelung des Volumenstromes durch den Abgasrückführungskühler 6 ist in der zweiten Abgasableitung 21 ein erstes Ventil 30 angeordnet. Dieses erste Ventil 30 ist in Figur 1 in geschlossener Stellung dargestellt, so dass die zweite Abgasableitung 21 geschlossen ist und somit das gesamte Abgas durch den Abgasrückführungskühler 6 geleitet wird und dieser demzufolge die gesamte Menge des Abgases verwerten kann.

Ist eine Verwertung der Wärme des genannten Abgases durch den Abgasrückführungskühler nicht gewünscht, kann das erste Ventil 30 geöffnet werden, so dass Abgas in verstärktem oder vollständigem Maß durch die zweite Abgasableitung im abzuleitenden Volumenstrom 51 an die Umgebung abgeleitet wird.

Zur Einstellung, wieviel zurückzuführendes Abgas nach vollständiger Verwertung im Abgasrückführungskühler 6 dem Verdichter 71 des Abgas-Turbo-Laders 70 zugeführt wird, ist in der Rückführungsleitung 60 ein zweites Ventil 90 angeordnet. Bei Schließung dieses zweiten Ventils 90 kann durch den Abgasrückführungskühler 6 geleitetes Abgas nicht zum Verdichter 71 strömen, sondern muss durch die erste Abgasableitung 11 an die Umgebung abgeleitet werden.

Ergänzend kann außerdem in der ersten Abgasableitung 11 ein drittes Ventil 100 angeordnet sein, mit welchem die Abgasrückführrate erhöht werden kann.

Das erste Ventil 30 kann dabei derart ausgestaltet sein, dass es wie in Figur 1 in einer Position die zweite Abgasableitung 21 vollständig schließt und dabei die erste Abgasableitung 11 vollständig öffnet und bei Umschaltung die erste Abgasableitung 11 vollständig schließt und die zweite Abgasableitung 21 vollständig öffnet, wie es mit der gestrichelten Linie am Ende der ersten Abgasableitung 11 angedeutet ist.

Insbesondere in dieser Ausgestaltung erübrigt sich die Anordnung des bereits erwähnten dritten Ventils.

Mittels der erfindungsgemäßen Einrichtung lässt sich bei Schließung des ersten Ventils 30 der gesamte Volumenstrom des Abgases durch den Abgasrückführungskühler 6 hindurchführen und somit die gesamte Abgaswärme in diesem nutzen.

In Figur 2 ist ein Ventil dargestellt, welches sowohl als erstes, zweites und/oder drittes Ventil der erfindungsgemäßen Einrichtung eingesetzt werden kann. Es ist ersichtlich, dass durch dieses Ventil der Abgas-Volumenstrom in Richtung der Strömung 1 aufgeteilt wird, je nach Position der Klappe 31, welche schwenkbar an einem Gelenk 32 angeordnet ist. Zur besseren Darstellung der einzelnen Ventilteile ist die Klappe 31 schraffiert abgebildet. Wie in Figur 2 und auch in Figur 1 dargestellt ist, verschließt die Klappe 31 in der dargestellten Position die zweite Abgasableitung 21 und gibt die erste Abgasableitung 11 vollständig frei. Bei einem Herumschwenken der Klappe 31 im Uhrzeigersinn um 90° wäre die erste Abgasableitung 11 vollständig geschlossen und die zweite Abgasableitung 21 vollständig geöffnet. Die Steuerung und/oder Regelung der Bewegung der Klappe 31 kann durch eine geeignete Aktorik (elektrisch oder pneumatisch), die bevorzugt am Gelenk 32 anzuordnen ist, vorgenommen werden.

Die erfindungsgemäße Einrichtung zur Abgasrückführung ist vorzugsweise in einem Niederdruck-Abgasrückführungspfad angeordnet, wobei sie jedoch nicht auf diesen Niederdruck-Abgasrückführungspfad eingeschränkt ist, sondern auch in einen Hochdruck-Abgasrückführungsbereich eingesetzt werden kann. Sie ist bevorzugt an einer Dieselmaschine anzuwenden, wobei sie jedoch auch an einem Ottomotor Verwendung finden kann. Dabei ist ihre Verwendung nicht auf den Einsatz an Brennkraftmaschinen eingeschränkt, sondern sie kann auch zum Beispiel an Heizanlagen beziehungsweise Heizkesseln, die mit einer Abgasrückführung versehen sind, funktionieren.

Dabei ist wichtig, dass das erste Ventil 30 nicht in der Abgaszuführung beziehungsweise in der Zuleitung 5 zum Abgasrückführungskühler 6 angeordnet ist, sondern in der vor dem Abgasrückführungskühler 6 abzweigenden zweiten Abgasableitung 21. Es lässt sich mit diesem ersten Ventil 30 erfindungsgemäß die Größe des Volumenstromes durch den Abgasrückführungskühler und somit die dort abgegebene Wärmemenge regeln.

Die erfindungsgemäße Einrichtung zeichnet sich durch einen geringen Bauaufwand aus, da übliche Bauelemente eines Abgasrückführungsstranges genutzt werden können. Es sind zur Anordnung der ersten und gegebenenfalls zweiten Abgasableitung nur geringe bauliche Erweiterungen notwendig, so dass die Erfindung in einfacher und kosteneffizienter Weise mit geringem Zeitaufwand realisiert werden kann. Die Wärmeübertragung vom Abgas an den Abgasrückführungskühler 6 beziehungsweise an das durch den Abgasrückführungskühler 6 strömende Kühlmedium erfolgt an einer thermisch optimalen Stelle, da stromaufwärts des Abgasrückführungskühlers 6 gegebenenfalls zu hohe Temperaturen auftreten, um die Erwärmung des Kühlmediums beherrschen zu können, und stromabwärts des Abgasrückführungskühlers 6 gegebenenfalls zu geringe Temperaturen und außerdem für gewöhnlich sehr beengte Bauraumverhältnisse auftreten.

Die erfindungsgemäße Einrichtung zur Abgasrückführung kommt somit an einem Kraftfahrzeug beziehungsweise an einer Brennkraftmaschine mit nur einem Abgasrückführungskühler 6 aus, der serienmäßig am Kraftfahrzeug angeordnet ist und der lediglich gemäß der Erfindung ausgestaltet beziehungsweise zu ergänzen ist.

### Bezugszeichenliste

- 1: Richtung der Strömung
- 2: strömungstechnische Verbindung
- 3: Katalysator
- 4: Partikelfilter
- 5: Zuleitung
- 6: Abgasrückführungskühler
- 10: erste Abzweigung
- 11: erste Abgasableitung
- 20: zweite Abzweigung
- 21: zweite Abgasableitung
- 30: erstes Ventil
- 31: Klappe
- 32: Gelenk
- 40: Volumenstrom des Abgases in der ersten Abgasableitung
- 50: Volumenstrom durch den Abgasrückführungskühler
- 51: abzuleitender Volumenstrom
- 60: Rückführungsleitung
- 70: Abgasturbolader
- 71: Verdichter
- 72: Turbine
- 80: Einmündung
- 90: zweites Ventil
- 100: drittes Ventil

## Patentansprüche

1. Abgasrückführungseinrichtung zur zumindest teilweisen Rückführung von Abgasen einer Verbrennungseinrichtung in einen der Verbrennungseinrichtung zuzuführenden Gasstrom, umfassend
einen Strömungskanal für das rückzuführende Abgas;
eine Turbine (72) eines Abgas-Turboladers (70), einen Katalysator (3), einen Partikelfilter (4) und einen Abgasrückführungskühler (6) zur Abkühlung des Abgases und zur Ableitung von Abgaswärme, die nacheinander in dem Strömungskanal angeordnet sind;
eine stromabwärts des Abgasrückführungskühlers (6) angeordnete erste Abzweigung (10), an der eine erste Abgasableitung (11) zur Ableitung von nicht rückzuführendem Abgas in die Umgebung angeschlossen ist;
eine stromaufwärts des Abgasrückführungskühlers (6) und stromabwärts des Partikelfilters (4) angeordnete zweite Abzweigung (10), an der eine zweite Abgasableitung (21) zur Ableitung von nicht rückzuführendem Abgas in die Umgebung angeschlossen ist; **gekennzeichnet durch**
ein kompaktes Gehäuse, in welchem der Abgasrückführungskühler (6), der Partikelfilter (4), die erste Abzweigung (10) und die zweite Abzweigung (20) angeordnet sind.

2. Abgasrückführungseinrichtung nach Anspruch 1, **dadurch gekennzeichnet, dass** in der zweiten Abgasableitung (21) ein erstes Ventil (30) zur Einstellung des Volumenstromes (40) des Abgases in der ersten Abgasableitung (11) und damit auch des verbleibenden Volumenstromes (50) durch den Abgasrückführungskühler (6) angeordnet ist.

3. Abgasrückführungseinrichtung nach Anspruch 1 oder 2, **dadurch gekennzeichnet, dass** an der ersten Abzweigung (10) eine Rückführungsleitung (60) zur Rückführung des Abgases zur Verbrennungseinrichtung angeordnet ist, die an einen Verdichter (71) des Abgas-Turboladers (70) angeschlossen ist oder anschließbar ist.

4. Abgasrückführungseinrichtung nach wenigstens einem der vorhergehenden Ansprüche, **dadurch gekennzeichnet, dass** die erste und die zweite Abgasableitung (11, 21) in einer Einmündung (80) miteinander verbunden sind.

5. Abgasrückführungseinrichtung nach wenigstens einem der vorhergehenden Ansprüche, **dadurch gekennzeichnet, dass** die Abgasrückführungseinrichtung stromaufwärts der zweiten Abzweigung (20) eine Zuleitung (5) zur Zuführung von Abgas zur ersten und zweiten Abzweigung (10, 20) und zum Abgasrückführungskühler (6) aufweist, wobei die Zuleitung ein Bestandteil des Partikelfilters (4) ist.

6. Abgasrückführungseinrichtung nach wenigstens einem der Ansprüche 3 bis 5, **dadurch gekennzeichnet, dass** die Abgasrückführungseinrichtung in der Rückführungsleitung (60) ein zweites Ventil (90) zur Einstellung des Volumenstromes des Abgases vom Abgasrückführungskühler (6) zum Verdichter (71) des Abgas-Turboladers (70) aufweist.

7. Abgasrückführungseinrichtung nach wenigstens einem der Ansprüche 2 oder 6, **dadurch gekennzeichnet, dass** das erste und/oder zweite Ventil (30, 90) als Schwenkklappe (31) ausgebildet ist, die in geschlossener Stellung einen Leckage-Volumenstrom des Abgases von maximal 10% eines durch einen vollständig geöffneten Durchlass des jeweiligen Ventils (30, 90) leitbaren Volumenstromes zulässt.

8. Abgasrückführungseinrichtung nach wenigstens einem der vorhergehenden Ansprüche, **dadurch gekennzeichnet, dass** der Abgasrückführungskühler (6) ein mit dem Abgas in Kontakt bringbares Katalysemittel aufweist.

9. Brennkraftmaschine, umfassend einen Abgas-Rückführungspfad sowie die Abgasrückführungseinrichtung nach wenigstens einem der Ansprüche 1 bis 8, diein einem Abgas-Rückführungspfad angeordnet ist.

10. Kraftfahrzeug, umfassend die Brennkraftmaschine nach Anspruch 9.

11. Verwendung der Abgasrückführungseinrichtung nach einem der Ansprüche 1 bis 8 zur Erwärmung eines Kühlmediums einer Brennkraftmaschine zwecks Erwärmung der Brennkraftmaschine und/oder eines Raumes oder Gegenstandes, bei dem Abgas in einem Abgas-Rückführungssystem durch einen Abgasrückführungskühler (6) in einen der Brennkraftmaschine zuzuführenden Gasstrom zurückgeleitet wird und der Abgasrückführungskühler (6) als Wärmetauscher Wärme vom Abgas in das Kühlmedium überträgt, so dass das Kühlmedium erwärmt wird, und stromabwärts des Abgasrückführungskühlers (6) der Abgas-Volumenstrom einer ersten Abzweigung (10) zugeführt wird, in der ein Teil dieses Abgas-Volumenstroms mittels einer ersten Abgasableitung (11) in die Umgebung abgeleitet wird und der verbleibende Teil des Abgas-Volumenstroms zur Brennkraftmaschine zurückgeleitet wird.

12. Verwendung nach Anspruch 11, **dadurch gekennzeichnet, dass** mittels eines ersten Ventils (30) in der zweiten Abgasableitung (21), die an der stromaufwärts des Abgasrückführungskühlers (6) angeordneten zweiten Abzweigung (20) angeschlossen ist, der Volumenstrom des Abgases durch die zweite Abgasableitung (21) und somit auch der verbleibende Volumenstrom von Abgas durch den Abgasrückführungskühler (6) eingestellt wird.

13. Verwendung nach wenigstens einem der Ansprüche 11 oder 12 zur Ausnutzung des gesamten Abgasstromes zwecks Erwärmung der Brennkraftmaschine und/oder eines Raumes eines von der Brennkraftmaschine angetriebenen Fahrzeuges.

14. Verwendung nach wenigstens einem der Ansprüche 11 bis 13 zur Steuerung oder Regelung des Abgasdruckes im Abgassystem zwecks Beeinflussung der Abgasrückfü hru ngsrate.

## Claims

1. Exhaust gas recirculation device for the at least partial recirculation of exhaust gases of a combustion device into a gas stream which is to be fed to the combustion device, comprising
a flow duct for the exhaust gas to be recirculated;
a turbine (72) of an exhaust gas turbocharger (70), a catalytic converter (3), a particulate filter (4) and an exhaust gas recirculation cooler (6) for cooling the exhaust gas and for dissipating the exhaust gas heat, which are arranged behind one another in the flow duct;
a first branch (10) which is arranged downstream of the exhaust gas recirculation cooler (6) and to which a first exhaust gas discharge line (11) is connected for discharging exhaust gas which is not to be recirculated into the surroundings;
a second branch (10) which is arranged upstream of the exhaust gas recirculation cooler (6) and downstream of the particulate filter (4) and to which a second exhaust gas discharge line (21) is connected for discharging exhaust gas which is not to be recirculated into the surroundings;
**characterized by**
a compact housing, in which the exhaust gas recirculation cooler (6), the particulate filter (4), the first branch (10) and the second branch (20) are arranged.

2. Exhaust gas recirculation device according to Claim 1, **characterized in that** a first valve (30) is arranged in the second exhaust gas discharge line (21) in order to set the volumetric flow (40) of the exhaust gas in the first exhaust gas discharge line (11) and therefore also the remaining volumetric flow (50) through the exhaust gas recirculation cooler (6).

3. Exhaust gas recirculation device according to Claim 1 or 2, **characterized in that** a recirculation line (60) is arranged at the first branch (10) in order to recirculate the exhaust gas to the combustion device which is connected or can be connected to a compressor (71) of the exhaust gas turbocharger (70).

4. Exhaust gas recirculation device according to at least one of the preceding claims, **characterized in that** the first and the second exhaust gas discharge line (11, 21) are connected to one another at a junction (80).

5. Exhaust gas recirculation device according to at least one of the preceding claims, **characterized in that**, upstream of the second branch (20), the exhaust gas recirculation device has a feed line (5) for feeding exhaust gas to the first and second branch (10, 20) and to the exhaust gas recirculation cooler (6), the feed line being a constituent part of the particulate filter (4) .

6. Exhaust gas recirculation device according to at least one of Claims 3 to 5, **characterized in that**, in the recirculation line (60), the exhaust gas recirculation device has a second valve (90) for setting the volumetric flow of the exhaust gas from the exhaust gas recirculation cooler (6) to the compressor (71) of the exhaust gas turbocharger (70).

7. Exhaust gas recirculation device according to at least one of Claims 2 or 6, **characterized in that** the first and/or second valve (30, 90) are/is configured as a pivotable flap (31) which, in the closed position, permits a leakage volumetric flow of the exhaust gas of at most 10% of a volumetric flow which can be conducted through a completely open passage of the respective valve (30, 90).

8. Exhaust gas recirculation device according to at least one of the preceding claims, **characterized in that** the exhaust gas recirculation cooler (6) has a catalysis agent which can be brought into contact with the exhaust gas.

9. Internal combustion engine, comprising an exhaust gas recirculation path and the exhaust gas recirculation device according to at least one of Claims 1 to 8 which is arranged in an exhaust gas recirculation path.

10. Motor vehicle, comprising the internal combustion engine according to Claim 9.

11. Use of the exhaust gas recirculation device according to one of Claims 1 to 8 for heating a cooling medium of an internal combustion engine for the purpose of heating of the internal combustion engine and/or a space or object, in the case of which exhaust gas is fed back in an exhaust gas recirculation system through an exhaust gas recirculation cooler (6) into a gas stream which is to be fed to the internal combustion engine, and the exhaust gas recirculation cooler (6), as a heat exchanger, transfers heat from the exhaust gas into the cooling medium, with the result that the cooling medium is heated, and the exhaust gas volumetric flow is fed downstream of the exhaust gas recirculation cooler (6) to a first branch (10), in which a part of the said exhaust gas volumetric flow is discharged into the surroundings by means of a first exhaust gas discharge line (11) and the remaining part of the exhaust gas volumetric flow is fed back to the internal combustion engine.

12. Use according to Claim 11, **characterized in that** the volumetric flow of the exhaust gas through the second exhaust gas discharge line (21) and therefore also the remaining volumetric flow of exhaust gas through the exhaust gas recirculation cooler (6) are set by means of a first valve (30) in the second exhaust gas discharge line (21) which is connected to the second branch (20) which is arranged downstream of the exhaust gas recirculation cooler (6).

13. Use according to at least one of Claims 11 or 12 for utilizing the entire exhaust gas stream for the purpose of heating of the internal combustion engine and/or a space of a vehicle which is driven by the internal combustion engine.

14. Use according to at least one of Claims 11 to 13 for controlling or regulating the exhaust gas pressure in the exhaust gas system for the purpose of influencing the exhaust gas recirculation rate.

## Revendications

1. Dispositif de renvoi des gaz d'échappement permettant de renvoyer au moins une partie des gaz d'échappement d'un dispositif de combustion dans un écoulement de gaz qui doit être apporté au dispositif de combustion, et comportant
un canal d'écoulement pour les gaz d'échappement à renvoyer,
une turbine (72) d'un turbocompresseur (70) entraîné par les gaz d'échappement, un catalyseur (3), un filtre (4) à particules et un refroidisseur (6) de renvoi des gaz d'échappement qui refroidit les gaz d'échappement et évacue la chaleur des gaz d'échappement, disposés à la suite les uns des autres dans le canal d'écoulement,
une première ramification (10) disposée en aval du refroidisseur (6) de renvoi des gaz d'échappement et à laquelle est raccordé un premier conduit (11) de gaz d'échappement qui évacue dans l'environnement les gaz d'échappement qui ne sont pas renvoyés,
une deuxième ramification (10) disposée en amont du refroidisseur (6) de renvoi des gaz d'échappement et en aval du filtre (4) à particules, à laquelle est raccordé un deuxième conduit (21) de gaz d'échappement qui évacue dans l'environnement les gaz d'échappement qui ne sont pas renvoyés,
**caractérisé par**
un boîtier compact dans lequel sont disposés le refroidisseur (6) de renvoi des gaz d'échappement, le filtre (4) à particules, la première ramification (10) et la deuxième ramification (20).

2. Dispositif de renvoi des gaz d'échappement selon la revendication 1, **caractérisé en ce qu'**une première soupape (30) qui règle le débit volumique (40) des gaz d'échappement dans le premier conduit (11) de gaz d'échappement et donc aussi du reste (50) de l'écoulement volumique traversant le refroidisseur (6) de renvoi des gaz d'échappement et disposé dans le deuxième conduit (21) de gaz d'échappement.

3. Dispositif de renvoi des gaz d'échappement selon les revendications 1 ou 2, **caractérisé en ce qu'**un conduit de renvoi (60) qui renvoie les gaz d'échappement vers le dispositif de combustion est disposé sur la première ramification (10) et est raccordé ou peut être raccordé à un compresseur (71) du turbocompresseur (70) entraîné par les gaz d'échappement.

4. Dispositif de renvoi des gaz d'échappement selon au moins l'une des revendications précédentes, **caractérisé en ce que** le premier et le deuxième conduit (11, 21) de gaz d'échappement sont reliés l'un à l'autre à une embouchure (80).

5. Dispositif de renvoi des gaz d'échappement selon au moins l'une des revendications précédentes, **caractérisé en ce que** le dispositif de renvoi des gaz d'échappement présente en amont de la deuxième ramification (20) un conduit d'amenée (5) qui amène les gaz d'échappement vers la première et la deuxième ramification (10, 20) et vers le refroidisseur (6) de renvoi des gaz d'échappement, le conduit faisant partie du filtre (4) à particules.

6. Dispositif de renvoi des gaz d'échappement selon au moins l'une des revendications 3 à 5, **caractérisé en ce que** le dispositif de renvoi des gaz d'échappement présente dans le conduit de renvoi (60) une deuxième soupape (90) qui règle le débit volumique des gaz d'échappement entre le refroidisseur (6) de renvoi des gaz d'échappement et le compresseur (71) du turbocompresseur (70) entraîné par les gaz d'échappement.

7. Dispositif de renvoi des gaz d'échappement selon au moins l'une des revendications 2 à 6, **caractérisé en ce que** la première et/ou la deuxième soupape (30, 90) sont configurées comme clapets pivotants (31) qui, en position fermée, permettent un débit de fuite de gaz d'échappement de 10 % du débit volumique qui peut être amené lorsque la soupape (30, 90) concernée a son passage complètement ouvert.

8. Dispositif de renvoi des gaz d'échappement selon au moins l'une des revendications précédentes, **caractérisé en ce que** le refroidisseur (6) de renvoi des gaz d'échappement présente un moyen de catalyse qui peut être mis en contact avec les gaz d'échappement.

9. Moteur à combustion interne comprenant un parcours de renvoi des gaz d'échappement ainsi que le dispositif de renvoi des gaz d'échappement selon au moins l'une des revendications 1 à 8, disposé dans un parcours e renvoi des gaz d'échappement.

10. Véhicule automobile comprenant le moteur à combustion interne selon la revendication 9.

11. Utilisation du dispositif de renvoi des gaz d'échappement selon l'une des revendications 1 à 8 pour réchauffer un fluide de refroidissement d'un moteur à combustion interne en vue de réchauffer le moteur à combustion interne et/ou d'un espace ou d'un objet, et dans laquelle, dans un système de renvoi des gaz d'échappement, les gaz d'échappement sont renvoyés à travers un refroidisseur (6) de renvoi des gaz d'échappement dans un écoulement de gaz qui doit être amené dans le moteur à combustion interne, le refroidisseur (6) de renvoi des gaz d'échappement transférant en tant qu'échangeur de chaleur la chaleur des gaz d'échappement dans le fluide de refroidissement de telle sorte que le fluide de refroidissement soit réchauffé, et en aval du refroidisseur (6) de renvoi des gaz d'échappement, l'écoulement volumique de gaz d'échappement étant amené à une première ramification (10) dans laquelle une partie de cet écoulement volumique de gaz d'échappement est évacuée dans l'environnement au moyen d'un premier conduit (11) de gaz d'échappement, la partie restante de l'écoulement volumique de gaz d'échappement étant renvoyée dans le moteur à combustion interne.

12. Utilisation selon la revendication 11, **caractérisée en ce que** l'écoulement volumique de gaz d'échappement dans le deuxième conduit (21) de gaz d'échappement et donc aussi le débit volumique restant de gaz d'échappement traversant le refroidisseur (6) de renvoi des gaz d'échappement étant réglés au moyen d'une première soupape (30) prévue dans le deuxième conduit (21) de gaz d'échappement, raccordé à la deuxième ramification (20) disposée en amont du refroidisseur (6) de renvoi des gaz d'échappement.

13. Utilisation selon au moins l'une des revendications 11 ou 12 en vue d'utiliser la totalité de l'écoulement de gaz d'échappement pour réchauffer le moteur à combustion interne et/ou un espace d'un véhicule entraîné par le moteur à combustion interne.

14. Utilisation selon au moins l'une des revendications 11 à 13 pour commander ou régler la pression de gaz d'échappement dans le système de gaz d'échappement en vue d'agir sur le taux de renvoi des gaz d'échappement.
